# EUROPEAN PATENT SPECIFICATION

(11) **EP 2 688 819 B1**
(45) Date of publication and mention of the grant of the patent: **24.12.2014**
(21) Application number: 12707772.5
(22) Date of filing: 09.03.2012
(51) Int. Cl.: B65G 17/20, E01B 25/26, B65G 9/00

(54) **AUTOMATIC DEVICE FOR THE CHANGE OF RAIL FOR OVERHEAD RAILS**
AUTOMATISCHE VORRICHTUNG ZUM WECHSELN VON HÄNGESCHIENEN
DISPOSITIF AUTOMATIQUE POUR LE CHANGEMENT DE RAIL, POUR RAILS AÉRIENS

(30) Priority: 22.03.2011 ES 201130411 P
(43) Date of publication of application: 29.01.2014
(73) Proprietor: Carrillo Lostao, Luis, 08940 Barcelona (ES)
(72) Inventor: Carrillo Lostao, Luis, 08940 Barcelona (ES)
(74) Representative: Isern-Jara, Nuria
(86) International application number: PCT/EP2012/054085
(87) International publication number: WO 2012/126746

(56) References cited:
- US-A- 2 761 396
- US-A- 3 628 462

## Description

### Subject matter of the invention

The present patent application has as objective the registration of an automatic device for rail change, according to the preamble of claim 1.

In particular, the invention corresponds to the field of the automatic devices for rail change and particularly overhead rails.

### Background to the invention

The aerial conveyor mechanisms moving along overhead rails are widely known. Also, devices to permit the corresponding rail changes and switch blades are also known.

The known devices are characterised by its high cost and complexity due to the fact that they imply the use of "smart tracks" which distribute the conveyor mechanisms in one or another direction.

An additional disadvantage deriving from the existing devices of this type is the reduction in the flow speed and the necessary separation between the rail cars to make the change, subsequently reducing the profitability, speed and flow.

A device as stated in the preamble of claim 1 is disclosed in US-A-2 761 396.

Moreover, the applicant does not know the existence of any previous devices for rail change having all of the technical, operative and structural characteristics which will be described in this application.

### Description of the invention

The invention has been developed with the aim to provide an automatic device for rail change to solve the above stated disadvantages, contributing at the same time other additional advantages which will be obvious from the following description.

Thus, it is an objective of this invention to provide an automatic device for rail change, particularly for overhead rails supported in the air, which is characterised for comprising a movable frame linearly displaceable along a support which includes two rolling assemblies, arranged in parallel on each side of the rail when in use, being each of said rolling assemblies articulated to the support, in which at least one of the rolling assemblies is articulated with rotating capacity, so that it is capable of swivelling in respect to the point of articulation, the support being articulated with rotating capacity in the moving frame for which reason it is capable to rotate in respect to said movable frame.

Thanks to these characteristics, an automatic device for rail change is obtained which permits an unlimited number of changes of rail in both directions. Moreover, it is not necessary to provide a complete "smart track", because the rail change is carried out from the same conveyor, so that a conventional rail may be used. Other additional advantages of the present device consist in that it does not reduce the flow speed of the operation and it does not need to increase the distance which separates the rail cars when making a rail change, such operation being carried out during the travel of the transporter.

Preferably, said support has an horizontal groove which determines the linear displacement of the moveable frame and some orifices at both sides of said groove in which the roller assemblies are articulated.

Said moveable frame has an elongated bar in which end a roller protrudes, having the capacity to move along said groove.

According to a preferred embodiment, each of said roller assemblies has at least two roller elements in opposition to each other, being said roller elements joined by means of a shaft, an arm being provided to associate said shaft and the support. Each of the roller elements has a wheel with a protruding rim in the border close to the shaft and a chamfered section in the border separate from the shaft. As to said arm, it is to be mentioned that it has in one end a ring like expansion through which passes said shaft.

Additionally, one element has been provided to connect in an articulated form each of said arms.

Another objective of the present invention consists in providing a conveyor having guiding means which may travel along an overhead rail, which is characterised by comprising an automated device for the rail change according to the invention.

Other features and advantages of the automatic device for the rail change which is the object of the present invention will be obvious from the description of a preferred, although not exclusive, embodiment of the invention shown as a non limitative example in the appended drawings in which:

### Brief description of the drawings

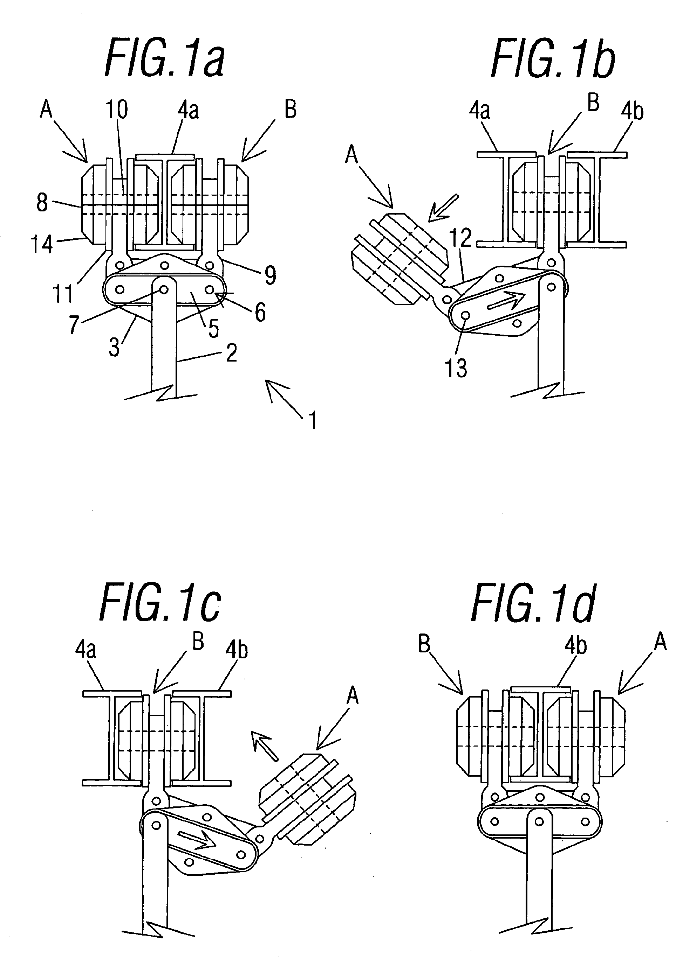

Figure 1. A view of an operation sequence of the automatic device for the change of rail according to the invention.

### Description of a preferred embodiment

As is to be seen in figure 1, an automatic device for rail change has been shown, particularly for overhead rails supported in the air generally indicated with the reference numeral 1, according to the present invention. Various arrows have been included to indicate the direction of the movement in each case to facilitate the understanding of the invention.

In figure 1 a the automatic device for rail change 1 has been shown in a first stage of the operating sequence. It may be observed that the device comprises a movable frame 2 which may be linearly displaced by means of a support 3 including two roller assemblies A, B arranged in parallel, one in each of the sides of the rail 4a, 4b in an operating condition, being each of the rolling assemblies A, B articulated to the support 3.

Preferably, both roller assemblies A, B are articulated with rotation capacity, so that they are able to swivel in respect to the articulation point 6, being the support 3 articulated with rotation capacity on the movable frame 2, for which reason it is capable to rotate in respect to said movable frame 2.

As may be seen in figure 1 a said support 3 has an horizontal groove 5 which determines the linear displacement of the movable frame 2, having as well orifices 13 at both sides of said groove 5 in which the roller assemblies A, B articulate.

It is also to be seen that said movable frame 2 has an elongated rod at which end preferably a roller 7 protrudes with capacity to travel along said groove 5. In the enclosed drawings said elongated rod has been shown only in part.

Each of said roller assemblies A,B have preferably two wheels 8 opposed to each other, being connected said wheels 8 by means of a shaft 10 (represented in dash lines to facilitate the understanding) and having an arm 9 which associates said shaft 10 and the support 3. Each of the wheels 8 has a protruding rim 11 in the border which is in the vicinity of the shaft 10 and a chamfered section 14 in the border which is separated from shaft 10.

Advantageously, said arm 9 has in one of its ends a ring like expansion through which said shaft 10 passes. Additionally, an element 12 has been provided to unite in an articulated form each of the arms 9.

The operating sequence of the rail change starts with a lineal displacement of the movable frame 2 along the horizontal groove 5 as shown in figure 1 b. At the same time the roller assembly A rotates in respect to the support 3 according to the illustrated arrow. It has to be pointed out that the roller assembly B supports the conveyor (not shown) thanks to the rail 4b to which the transporter has to be transferred along a parallel run, so that the wheels 8 of the roller assembly B displace along the two rails 4a and 4b.

Subsequently, the automatic device for the change of rail 1 continues its operation as derived from figure 1c, in which the arrows illustrate again the directions of movement. The chamfer 14 in the external border of the wheel 8 facilitates its introduction within the rail 4b.

Finally in figure 1d the automatic device for the change of rail 1 is shown after completing the operation of the rail change. Given that the roller assembly A moves, already along the rail 4b the presence of the rail 4a is no longer necessary, so that it the collaboration of rail 4a which may be finished off.

The novel and advantageous configuration of the automatic device for the change of rail 1 according to the invention, permits to change the position of a roller assembly articulated with rotating capacity in respect to the position of another roller assembly, with the possibility to be located both on the left side or on the right side in respect of the "fixed" roller assembly. Accordingly, a conveyor equipped with the described device has a capacity to change the rail in a fast, simple and completely automatic way, without the need to create rail junctions and maximizing the operating flow.

The automatic device for the change of rail 1 is preferably aimed for its application to an overhead load conveyor, although other applications of the invention are not to be discarded, for example the transport of persons.

The driving of the various elements which have been herein described is carried out by actuators, motors and processing units available on the market for which reason they will not be dealt with in more detail.

The details, forms, sizes and the rest of auxiliary elements as well as the material used for the manufacture of the automatic device for the change of rail of the present invention may be conveniently substituted by other technically equivalent elements not departing from the essential characteristics of the invention nor from the scope of the same as defined in the following claims.

## Claims

1. Automatic device for rail change (1), for overhead rails, whereby comprises a movable frame (2) linearly displaceable along a rail (4a, 4b) by means of support (3) which includes two roller assemblies (A,B) which are arranged in parallel on each side of the rail (4a, 4b) in operating condition, each of the roller assemblies being articulated to the support (3) in which at least one of the roller assemblies is articulated with rotating capacity so that it is capable of swivelling on an articulation point (6), **characterised in that** the support (3) is articulated with rotating capacity on the movable frame (2), therefore being capable to rotate in respect to said movable frame (2).

2. Automatic device for rail change (1), according to claim 1, **characterised in that** said support (3) has an horizontal groove (5) which describes the linear displacement of the movable frame (2) and orifices (13) at both sides of said groove (5) in which the roller assemblies articulate.

3. Automatic device for rail change (1), according to claims 1 and 2, **characterised in that** said movable frame (2) comprises an elongated rod at which end a roller (7) protrudes having the capacity to move along said groove (5).

4. Automatic device for rail change (1), according to claim 1, **characterised in that** each of said roller assemblies has at least two rolling elements opposed to each other, being said rolling elements joined by a shaft (10), and an arm (9) is provided to associate said shaft (10) and the support (3).

5. Automatic device for rail change (1), according to claim 4, **characterised in that** each of the rolling elements has a wheel (8) with a protruding rim (11) in the border which is close to the shaft (10) and a chamfer (14) in its border which is separate from the shaft (10).

6. Automatic device for rail change (1), according to claim 4, **characterised in that** said arm (9) has a ring-like broadening in its end through which said shaft (10) passes.

7. Automatic device for rail change (1), according to claim 4, **characterised in that** an element (12) is provided to connect in an articulated form the arms (9).

8. Conveyor which comprises guiding means displaceable along an overhead rail (4a, 4b), **characterised in that** it comprises an automatic device for rail change according to claim 1.

## Patentansprüche

1. Automatische Vorrichtung zur Umspurung (1) für Oberführungsschienen, wobei die Vorrichtung einen beweglichen Rahmen (2) aufweist, der linear an einer Schiene (4a, 4b) entlang bewegbar ist, mittels eines Trägers (3), der zwei Rollenmechanismen (A, B) umfasst, welche in ihrer Betriebslage parallel zu jeder Seite der Schiene (4a, 4b) angeordnet sind, wobei jeder der Rollenmechanismen am Träger (3) beweglich gelagert ist, wobei zumindest einer der Rollenmechanismen mit Fähigkeit zur Rotation angelenkt ist, so dass er dazu imstande ist, um einen Gelenkpunkt (6) zu schwenken, **dadurch gekennzeichnet, dass** der Träger (3) mit Fähigkeit zur Rotation an dem beweglichen Rahmen (2) angelenkt ist, und dadurch geeignet ist, sich in Bezug auf besagten beweglichen Rahmen (2) zu drehen.

2. Automatische Vorrichtung zur Umspurung (1) gemäss dem Anspruch 1, **dadurch gekennzeichnet, dass** besagter Träger (3) eine horizontale Nut (5) aufweist, welche die lineare Bewegung des beweglichen Rahmens (2) beschreibt, sowie Öffnungen (13) auf beiden Seiten dieser Nut (5), in denen die Rollenmechanismen beweglich gelagert sind.

3. Automatische Vorrichtung zur Umspurung (1) gemäss den Ansprüchen 1 und 2, **dadurch gekennzeichnet, dass** der besagte bewegliche Rahmen (2) eine längliche Stange aufweist, an deren Ende eine Rolle (7) herausragt, die dazu geeignet ist, sich entlang der besagten Nut (5) zu bewegen.

4. Automatische Vorrichtung zur Umspurung (1) gemäss dem Anspruch 1, **dadurch gekennzeichnet, dass** jeder der besagten Rollenmechanismen zumindest zwei einander gegenüberliegende Rollenelemente umfasst, wobei diese Rollenelemente von einer Welle (10) gekoppelt sind, und dass ein Arm (9) vorgesehen ist, um die besagte Welle (10) und den Träger (3) miteinander zu verbinden.

5. Automatische Vorrichtung zur Umspurung (1) gemäss dem Anspruch 4, **dadurch gekennzeichnet, dass** jedes der besagten Rollenelemente ein Rad (8) mit einem hervorstehenden Rand (11) an derjenigen Kante umfasst, die sich in der Nähe der Welle (10) befindet, und eine Abschrägung (14) an derjenigen Kante, die von der Welle (10) entfernt ist.

6. Automatische Vorrichtung zur Umspurung (1) gemäss dem Anspruch 4, **dadurch gekennzeichnet, dass** der besagte Arm (9) an seinem Ende eine ringähnliche Erweiterung aufweist, durch welche die Welle (10) hindurch geht.

7. Automatische Vorrichtung zur Umspurung (1) gemäss dem Anspruch 4, **dadurch gekennzeichnet, dass** ein Element (12) vorgesehen ist, um die Arme (9) in gelenkiger Form miteinander zu verbinden.

8. Fördervorrichtung, die Führungsmittel umfasst, welche entlang einer Oberführungsschiene (4a, 4b) beweglich sind, **dadurch gekennzeichnet, dass** sie eine automatische Vorrichtung zur Umspurung gemäss dem Anspruch 1 umfasst.

## Revendications

1. Dispositif automatique pour changement de rail (1) pour des rails aériens, dans lequel le dispositif comprend un cadre mobile (2) qui peut être déplacé de manière linéaire le long d'un rail (4a, 4b) par le biais d'un support (3), qui comprend deux mécanismes de rouleaux (A, B) qui, dans leur condition de fonctionnement, sont agencés parallèles l'un à l'autre, de chaque côté du rail (4a, 4b), dans lequel chacun des mécanismes de rouleau est articulé de manière mobile au support (3), dans lequel au moins un des mécanismes de rouleau est articulé avec capacité de rotation, de telle manière qu'il est capable de pivoter autour d'un point d'articulation (6), **caractérisé en ce que** le support (3) est articulé avec capacité de rotation sur le cadre mobile (2), étant donc capable de pivoter en regard dudit cadre mobile (2).

2. Dispositif automatique pour changement de rail (1) suivant la revendication 1, **caractérisé en ce que** ledit support (3) présente une rainure horizontale (5) qui décrit le déplacement linéaire du cadre mobile (2), ainsi que des ouvertures (13) sur les deux côtés de cette rainure (5), dans lesquelles sont articulés les mécanismes de rouleau.

3. Dispositif automatique pour changement de rail (1) suivant les revendications 1 et 2, **caractérisé en ce que** ledit cadre mobile (2) comprend une tige allongée à l'extrémité de laquelle dépasse un rouleau (7) qui a la capacité de se déplacer le long de cette rainure (5).

4. Dispositif automatique pour changement de rail (1) selon la revendication 1, **caractérisé en ce que** chacun de ces mécanismes de rouleau comprend au moins deux éléments de rouleau, opposés l'un à l'autre, dans lequel lesdits éléments de rouleau sont accouplés par un arbre (10), et un bras (9) est pourvu afin de relier ledit arbre (10) et le support (3).

5. Dispositif automatique pour changement de rail (1) selon la revendication 4, **caractérisé en ce que** chacun de ces éléments de rouleau comprend une roue (8) avec un bord (11) qui dépasse à la bordure qui se trouve à proximité de l'arbre (10) et un chanfrein (14) à la bordure qui est séparée de l'arbre (10).

6. Dispositif automatique pour changement de rail (1) selon la revendication 4, **caractérisé en ce que** ledit bras (9) présente un élargissement similaire à un anneau dans son extrémité au travers duquel cet arbre (10) passe.

7. Dispositif automatique pour changement de rail (1) selon la revendication 4, **caractérisé en ce qu'**il est pourvu un élément (12) afin de connecter les bras (9) dans une manière articulée.

8. Convoyeur qui comprend des moyens de guidage qui peuvent se déplacer le long d'un rail aérien (4a, 4b), **caractérisé en ce qu'**il comprend un dispositif automatique pour changement de rail selon la revendication 1.
